# EUROPEAN PATENT SPECIFICATION

(11) **EP 0 667 244 B1**
(45) Date of publication and mention of the grant of the patent: **05.11.1997**
(21) Application number: 95300165.8
(22) Date of filing: 11.01.1995
(51) Int. Cl.: B41M 3/16

(54) **Indications for the visually handicapped using transparent three-dimensional ink**
Anzeigen für Sehbehinderte unter Verwendung transparenter dreidimensionaler Tinte
Indications pour les handicapés de la vue en utilisant une encre transparente à trois dimensions

(30) Priority: 12.01.1994 JP 1055/94; 08.02.1994 JP 2307/94; 28.02.1994 JP 3460/94
(43) Date of publication of application: 16.08.1995
(73) Proprietor: YUUGENKAISHA MEDIAMEWS, Shinjuku-ku, Tokyo 162 (JP); KABUSHIKIKAISHA SANICHI-KOUGEISHA, Matsudo-shi, Chiba 271 (JP)
(72) Inventor: Fukumoto, Masayuki, Arakawa-ku, Tokyo 116 (JP)
(74) Representative: Votier, Sidney David

(56) References cited:
- WO-A-94/00301

## Description

### BACKGROUND OF THE INVENTION

The present invention relates to indications for the visually handicapped using transparent three-dimensional ink.

Of the prior-art indications for the visually handicapped, for example, the braille printed matter indications have been produced by stamping or braille typing only for the visually handicapped.

It is therefore impossible for the healthy persons to learn the braille points simply by oneself. In general, it becomes necessary to attend braille classes sponsored by social welfare organs or self-governing bodies, or to receive correspondence lessons in braille points. The braille points are a respectable language. Accordingly, if there is a method by which the healthy persons can understand the braille points more than they are used to, the exchange between the healthy persons and the visually handicapped is expected to be activated.

Further, of the indications for the visually handicapped, the packages of the labels are made for the healthy persons. The visually handicapped can not therefore understand contents thereof in advance by oneself. Furthermore, when the braille points are indicated in spaces of the packages or the labels, treatment such as stamping or braille typing is required, which possibly damages designs of the packages or the labels themselves.

Accordingly, when the visually handicapped purchase daily necessaries always used, they must be helped by the healthy persons. Also after purchase, sticking of braille seals on the purchased goods is required to use them smoothly. Further, when the manufacturers grapple with this problem with effort, they can not choose but add the braille points to the packages or the labels which are said to be "faces of goods", thereby changing designs thereof, or additionally indicating the braille points in blank spaces thereof.

Furthermore, designs for the visually handicapped indicated on printed matter are formed with three-dimensional ink in which foamed ink is colored, or by the blind stamping technique. The designs for the visually handicapped printed on the printed matter are thus composed of lines alone using three-dimensional ink, forming the printed matter exclusively for the visually handicapped. In addition, this printed matter is colored in lines alone even if it is colored, and the face thereof is left uncolored as a white ground, in many cases.

### SUMMARY OF THE INVENTION

An object of the present invention is to provide an indication for the visually handicapped indicated on a printed medium through which both the healthy persons and the visually handicapped can have communication with each other.

Another object of the present invention is to provide an indication for the visually handicapped which makes it possible for the visually handicapped to select goods by oneself and to easily distinguish them from similar packages and cases of goods in everyday life.

It is a further object of the present invention to provide an indication for the visually handicapped which can be utilized for a picture for painting for the visually handicapped, using an ordinary printed design, and which is useful as a supplemental tool for the concepts of the color and the shape for the visually handicapped.

According to the present invention, there is provided an indication for the visually handicapped using transparent three-dimensional ink which is characterized in that a letter and/or a design is formed using the transparent three-dimensional ink on the indication on which an usual letter and/or design for the healthy persons is indicated.

### BRIEF DESCRIPTION OF THE DRAWINGS

Fig. 1 (A) is a plan view showing a first embodiment of an indication for the visually handicapped using transparent three-dimensional ink of the present invention, wherein braille points of the same sound are formed using the transparent three-dimensional ink on printed matter on which letters are printed, and Fig. 1 (B) is a side elevational view thereof;
Fig. 2 (A) is a plan view showing prior-art printed matter on which letters are printed, and Fig. 2 (B) is a side elevational view thereof;
Fig. 3 (A) is a plan view showing prior-art braille printed matter, and Fig. 3 (B) is a side elevational view thereof;
Fig. 4 (A) is a plan view showing a second embodiment of an indication for the visually handicapped using transparent three-dimensional ink of the present invention, wherein necessary information is formed as braille points using the transparent three-dimensional ink on a package or a label of a good on which a design and letters are printed , and Fig. 2 (B) is a side elevational view thereof;
Fig. 5 is a plan view showing a prior-art package or label of a good containing necessary information;
Fig. 6 is a plan view showing a prior-art package or label of a good, wherein necessary information is stamped as braille points on the package or the label on which a design and letters are printed;
Fig. 7 (A) is a plan view showing a third embodiment of an indication for the visually handicapped using transparent three-dimensional ink of the present invention, wherein a design for the healthy persons is identical with and overlapped with that for the visually handicapped, and Fig. 7 (B) is a plan view showing an indication, wherein a design for the healthy persons is different from that for the visually handicapped; and
Fig. 8 (A) is a plan view showing prior-art usual printed matter for the healthy persons on which a design is printed, and Fig. 8 (B) is a plan view showing prior-art printed matter for the visually handicapped on which a design is printed using transparent three-dimensional ink.

### DETAILED DESCRIPTION OF THE PREFERRED EMBODIMENTS

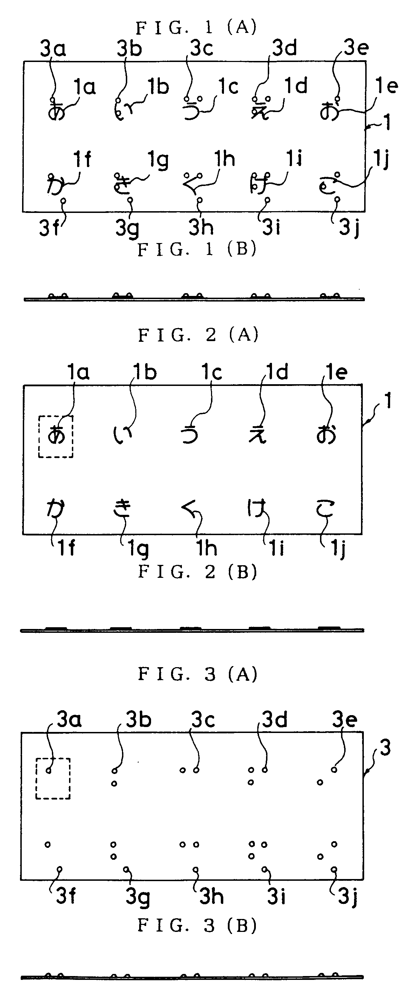

A first embodiment of the present invention, a braille indication using transparent three-dimensional ink, is illustrated with reference to Figs. 1 to 3.

Fig. 2 shows prior-art printed matter on which letters 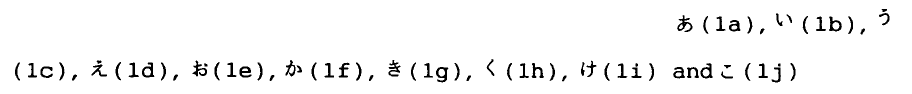 are printed by ordinary ink. Japanese letters are printed on a substrate 1 such as paper printable with ink. The healthy persons can read the letters, but the visually handicapped can not understand them.

Further, Fig. 3 shows prior-art braille printed matter. Braille points 3a, 3b, 3c, 3d, 3e, 3f, 3g, 3h, 3i and 3j corresponding to Japanese letters 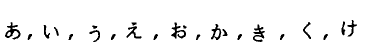 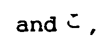 respectively, are formed with transparent three-dimensional ink on a substrate 3 such as paper. The visually handicapped can read the braille points, but the healthy persons can not understand them.

In the first embodiment of the present invention, as shown in Fig. 1, Japanese letters 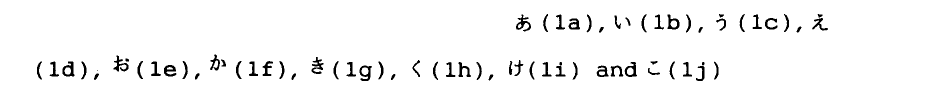 are printed on a substrate 1 such as paper printable with ink, and braille points 3a, 3b, 3c, 3d, 3e, 3f, 3g, 3h, 3i and 3j corresponding thereto are formed on portions corresponding to the respective Japanese letters.

Thus, according to the braille printed matter of the first embodiment, both the healthy persons and the visually handicapped can understand the letters described on the printed matter.

Here, the letters mean Chinese characters, "hiragana" (Japanese cursive syllabaries), "katakana" (Japanese square syllabaries), numerals, alphabets, symbols, etc. Further, the transparent three-dimensional ink is ink through which ground letters or colors printed on the printed matter can pass as such without failure.

Materials for the transparent three-dimensional ink include, for example, thermoplastic resin powders, foamed ink expandable by heating and photo-curing ink hardenable by ultraviolet radiation. The photo-curing ink is particularly preferred among others, in terms of excellent heat resistance and abrasion resistance, good adhesion to substrate layers constituting the indications, hardenability at about 40°C and no damages to materials such as the substrate layers. Examples of the transparent three-dimensional ink include photo-curing acrylic resins, epoxy resins, urethane resins and unsaturated polyester resins. The transparent three-dimensional ink may contain various kinds of pigments and dyes to color it, as long as transparency thereof is not impaired.

According to the first embodiment, the healthy persons can understand the letters as usual printed mater, and the visually handicapped can also understand the letters as conventional braille printed matter.

Accordingly, both the healthy persons and the visually handicapped can have communication with each other through this printed matter. Further, for example, Japanese letter 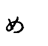 is overlapped with the corresponding braille points of the same sound, so that the healthy persons can very easily learn the braille without a master. This also results in that a visually handicapped child and a healthy child can have a conversation with each other through a picture book.

Like this, the first embodiment is greatly helpful in contributing to welfare.

In the first embodiment, each letter printed on the printed matter is overlapped with the braille points of the same sound using the transparent three-dimensional ink, but the present invention is not limited thereto.

For example, a design printed on the printed matter may be overlapped with braille points having the same meaning as the design, using the transparent three-dimensional ink. Further, the braille points using the transparent three-dimensional ink may be different in their meanings from the letters and/or designs indicated on the printed matter, and they may be, for example, necessary information for these letters and/or designs.

Furthermore, in the first embodiment, paper is illustrated as the material of the substrate 1, but the material is not limited thereto. Examples of the materials which can be employed include plastics, metals and ceramics. The substrate may have not only a sheet-like form represented by paper, but also a three-dimensional form.

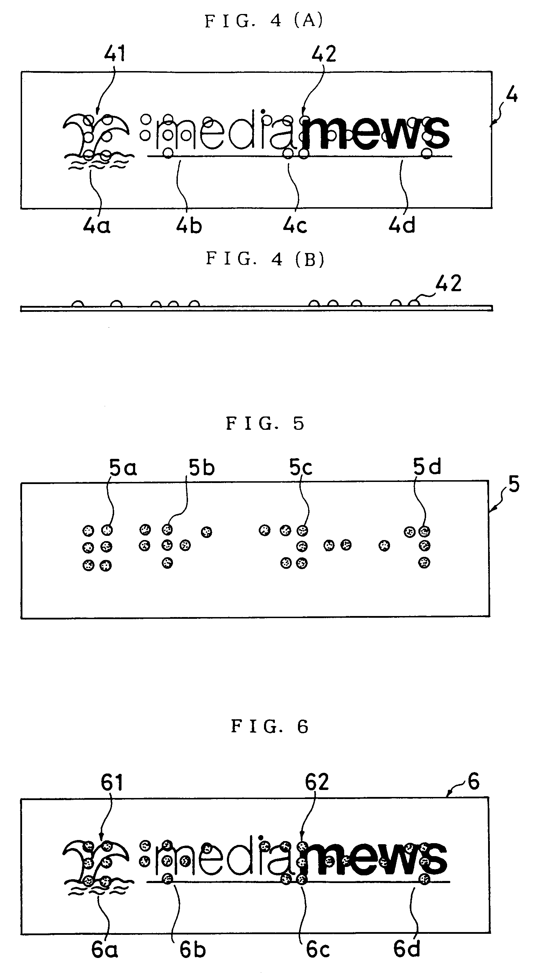

Then, a second embodiment of the present invention, a braille indication using transparent three-dimensional ink, is illustrated with reference to Figs. 4 to 6.

Fig. 5 shows a prior-art braille package or label of a good. Braille points 5a, 5b, 5c and 5d corresponding to necessary information are formed with transparent three-dimensional ink on a substrate 5 of the package or the label. The visually handicapped can read the braille points, but the healthy persons can not understand them.

Further, Fig. 6 shows a prior-art package or label of a good. A design 61 and letters 62 are printed on a substrate 6 of the package or the label, and braille points 6a, 6b, 6c and 6d resulting necessary information are formed by stamping in positions approximately corresponding to the design and the letters. In the prior-art package or label, the braille points are formed by stamping, so that the design and the letters printed on the substrate of the package or the label are disturbed in their expression by the braille points stamped.

In the second embodiment of the present invention, as shown in Fig. 4, a design 41 and letters 42 are printed on a substrate 4 of a package or a label of a good, and braille points 4a, 4b, 4c and 4d resulting necessary information are formed using transparent three-dimensional ink in positions approximately corresponding to the design and the letters.

Here, the information is information such as the name of the good or the description of the contents thereof associated with the package or the label, and the braille points may have the same meanings as the design and the letters, or may be different therefrom in their meanings.

According to the second embodiment, it becomes possible for the visually handicapped to select the good by oneself and to easily distinguish it from similar packages and cases of goods in everyday life.

Further, the manufacturers can give information for the package or the label of the good to the consumers without changing the package or the label which have hitherto been used.

The manufacturers can therefore allow the visually handicapped to be contained in the consumers, which makes it possible to enlarge the market. Further, the braille points can share a restricted space of a container with the printed design and letters. It is therefore possible to give information to some extent even through a small container. Furthermore, the use of the transparent three-dimensional ink causes no necessity of changes in the design of the package or the label which has hitherto been used.

The other structures, functions and effects of the second embodiment are similar to those of the first embodiment, and therefore, descriptions thereof are omitted.

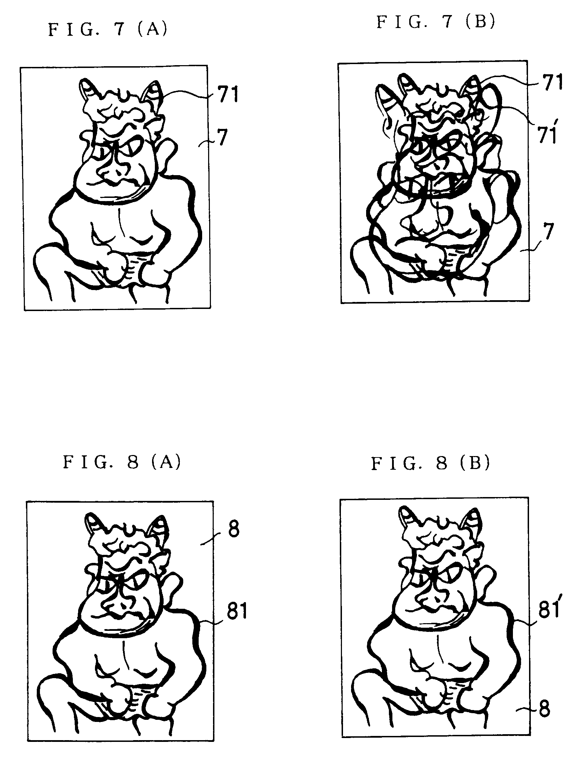

Then, a third embodiment of the present invention, a braille indication using transparent three-dimensional ink, is illustrated with reference to Figs. 7 and 8.

Fig. 8 (A) shows a printed matter on which a conventional ordinary design is printed with ordinary ink. An ordinary design 81 is printed on a substrate 8 forming a plate. The healthy persons can understand this design, but the visually handicapped can not understand it. On the other hand, Fig. 8 (B) shows conventional printed matter for the visually handicapped. A design 81' (information intended to be given to the visually handicapped) is formed on the substrate 8 using transparent three-dimensional ink. The visually handicapped can understand this design, but this is insufficient for the healthy persons as a design.

In the third embodiment of the present invention, as shown in Fig. 7 (A), a design 71 is printed on a substrate 7 forming a plate with ordinary ink, and a design 71' (information intended to be given to the visually handicapped) having the same meaning as the design 71 is formed thereon using transparent three-dimensional ink. The designs overlapped with each other provide the same information. Accordingly, both the healthy persons and the visually handicapped can understand the design formed on the substrate 7.

Further, Fig. 7 (B) of the third embodiment is the same as with Fig. 7 (A) with the exception that the ordinary design 71 for the healthy persons is different from the design 71' (information intended to be given to the visually handicapped) for the visually handicapped and the designs overlapped with each other provide different information.

According to the third embodiment, the healthy persons can recognize the design or color on a ground as such, and the visually handicapped, particularly the amblyopic persons, can recognize them under the guidance of the transparent three-dimensional ink. The completely blind persons can recognize the shape by using the transparent three-dimensional ink as a guideline.

Like this, according to the third embodiment, it becomes possible for both the healthy persons and the visually handicapped to have communication with each other, and it can be useful as a supplemental tool for the color and the shape for the visually handicapped. In addition, it can be utilized for a picture for painting for the visually handicapped, using an ordinary printed design.

The other structures, functions and effects of the third embodiment are similar to those of the first embodiment, and therefore, descriptions thereof are omitted.

## Claims

1. An indication for the visually handicapped using transparent three-dimensional ink characterized in that a letter and/or a design is formed using the transparent three-dimensional ink on the same location of a surface as a usual letter and/or design for the healthy persons.

2. The indication according to claim 1, wherein said indication is printed matter.

3. The indication according to claim 2, wherein the letter and/or the design formed using the transparent three-dimensional ink has the same meaning as the usual letter and/or design for the healthy persons indicated on the printed matter.

4. The indication according to claim 2, wherein the letter and/or the design formed using the transparent three-dimensional ink is different in its meaning from the usual letter and/or design for the healthy persons indicated on the printed matter.

5. The indication according to claim 1, wherein said indication is a package or a label of a good.

6. The indication according to claim 5, wherein the letter and/or the design formed using the transparent three-dimensional ink has the same meaning as the usual letter and/or design for the healthy persons indicated on the package or the label.

7. The indication according to claim 5, wherein the letter and/or the design formed using the transparent three-dimensional ink is necessary information for the good which is different in its meaning from the usual letter and/or design for the healthy persons indicated on the package or the label.

## Patentansprüche

1. Anzeige für Sehbehinderte unter Verwendung von dreidimensionaler Transparentfarbe,
**dadurch gekennzeichnet,** daß ein Buchstabe und/oder ein Design gebildet ist unter Verwendung der dreidimensionalen Transparentfarbe an demselben Ort einer Fläche wie ein herkömmlicher Buchstabe und/oder ein herkömmliches Design für gesunde Personen.

2. Anzeige nach Anspruch 1, bei welcher die Anzeige ein Druckerzeugnis ist.

3. Anzeige nach Anspruch 2, bei welcher der Buchstabe und/oder das Design, gebildet unter Verwendung der dreidimensionalen Transparentfarbe, dieselbe Bedeutung hat wie der herkömmliche Buchstabe und/oder das herkömmliche Design für gesunde Personen, angegeben an dem Druckerzeugnis.

4. Anzeige nach Anspruch 2, bei welcher der Buchstabe und/oder das Design, gebildet unter Verwendung der dreidimensionalen Transparentfarbe, unterschiedlich ist von der Bedeutung des herkömmlichen Buchstabens und/oder des herkömmlichen Designs für gesunde Personen, angegeben an dem Druckerzeugnis.

5. Anzeige nach Anspruch 1, bei welcher die Anzeige eine Verpackung oder ein Label eines Erzeugnisses ist.

6. Anzeige nach Anspruch 5, bei welcher der Buchstabe und/oder das Design, gebildet unter Verwendung der dreidimensionalen Transparentfarbe, dieselbe Bedeutung hat wie der herkömmliche Buchstabe und/oder das herkömmliche Design für gesunde Personen, angegeben an der Verpakkung oder dem Label.

7. Anzeige nach Anspruch 5, bei welcher der Buchstabe und/oder das Design, gebildet unter Verwendung der dreidimensionalen Transparentfarbe, eine notwendige Information für das Erzeugnis ist, welche unterschiedlich in der Bedeutung ist von dem herkömmlichen Buchstaben und/oder dem herkömmlichen Design für gesunde Personen, angegeben an der Verpakkung oder dem Label.

## Revendications

1. Indication pour les handicapés de la vue en utilisant une encre transparente à trois dimensions, caractérisée en ce qu'une lettre et/ou un dessin est formé à l'aide de l'encre transparente à trois dimensions sur le même emplacement d'une surface qu'une lettre et/ou un dessin ordinaire pour les personnes non handicapées.

2. Indication selon la revendication 1 dans laquelle ladite indication est imprimée.

3. Indication selon la revendication 2, dans laquelle la lettre et/ou le dessin formé à l'aide de l'encre transparente à trois dimensions a la même signification que la lettre et/ou le dessin ordinaire pour les personnes non handicapées indiqué sur l'imprimé.

4. Indication selon la revendication 2, dans laquelle la lettre et/ou le dessin formé à l'aide de l'encre transparente à trois dimensions a une signification différente de la lettre et/ou du dessin ordinaire pour les personnes non handicapées indiqué sur l'imprimé.

5. Indication selon la revendication 1 dans laquelle ladite indication se trouve sur un emballage ou une étiquette d'une marchandise.

6. Indication selon la revendication 5, dans laquelle la lettre et/ou le dessin formé à l'aide de l'encre transparente à trois dimensions a la même signification que la lettre et/ou le dessin ordinaire pour les personnes non handicapées indiqué sur l'emballage ou l'étiquette.

7. Indication selon la revendication 5, dans laquelle la lettre et/ou le dessin formé à l'aide de l'encre transparente à trois dimensions est une information nécessaire pour la marchandise qui a une signification différente de la lettre et/ou du dessin ordinaire pour les personnes non handicapées indiqué sur l'emballage ou l'étiquette.
